# EUROPÄISCHE PATENTANMELDUNG

(11) **EP 3 287 682 A1**
(43) Veröffentlichungstag der Anmeldung: **28.02.2018**
(21) Anmeldenummer: 16185296.7
(22) Anmeldetag: 23.08.2016
(51) Int. Cl.: F16L 21/06, F16L 31/00

(54) **HALTEEINRICHTUNG ZUR LÖSBAREN, KOAXIALEN VERBINDUNG VON SCHLAUCHLEITUNGEN**

(71) Anmelder: Streitmaier, Horst, 8770 St. Michael (AT)
(72) Erfinder: Streitmaier, Horst, 8770 St. Michael (AT)
(74) Vertreter: Staudt, Armin Walter

(57) **Zusammenfassung**

Die vorliegende Erfindung betrifft eine Halteeinrichtung zur lösbaren, koaxialen Auf-Stoß-Verbindung von Schlauchleitungen für Saugeinrichtungen, insbesondere für Industriesaugeinrichtungen und zeichnet sich dadurch aus, dass die Halteeinrichtung (1) mindestens drei Rohrsegmente (2, 3, 4) umfasst, welche in ihrer Gesamtheit ein in Rohrlängsrichtung segmentiertes Halterohr bilden, und dass die Rohrsegmente (2, 3, 4) an ihrer Außenfläche jeweils mit mindestens einem Ringsegment (5, 5', 5") verbunden sind, wobei die Ringsegmente (5, 5', 5") in einer gemeinsamen Querschnittsebene in Umfangsrichtung hintereinander verlaufend miteinander verbunden sind und in ihrer Gesamtheit einen Spannring (1 a; 1 b) um das Halterohr bilden, wobei die Verbindung in Umfangsrichtung benachbarter Ringsegmente (5, 5' 5") untereinander wahlweise über Scharniere (6) und über mindestens eine Einrichtung zum Verschließen des Spannrings (1 a; 1 b) auf Zug erfolgt.

## Beschreibung

### Technisches Gebiet

Die vorliegende Erfindung betrifft eine Halteeinrichtung zur lösbaren, koaxialen Auf-Stoß-Verbindung von Schlauchleitungen für Saugeinrichtungen, insbesondere für Industriesaugeinrichtungen und wird üblicherweise als Schlauchkupplung bezeichnet.

Industriesaugeinrichtungen sind seit langem bekannte Vorrichtungen, welche beispielsweise stationär in Verbindung mit Produktionsanlagen, bei denen trockene oder nahezu trockene Abfallprodukte unmittelbar an ihrem Entstehungsort abgesaugt werden, beispielsweise Metallspäne bei Fräsanlagen. Als mobile Industriesaugeinrichtungen werden sie für trockene Anwendungen eingesetzt, beispielsweise bei der Beseitigung von Bauschutt aus schwer zugänglichen Bereichen, wie Dachböden, Keller oder anderen Flächen, bei welchen Schaufelbagger nicht zum Einsatz kommen können, oder auch zur Entfernung von Schüttkies von Flachdächern vor deren Sanierung. Ebenfalls bekannt sind nasse Anwendungen zur Entleerung von Faultürmen oder Sickerschächten, oder zur Beseitigung von Industrieschlämmen, sowie zur Freilegung verstopfter Durchlässe.

Industriesaugeinrichtungen bestehen im Wesentlichen aus einem Saugaggregat, einem Auffangbehälter für das abgesaugte Material und einem Saugschlauch. Der flexible Saugschlauch besitzt abhängig von seinem Anwendungsgebiet üblicherweise eine Länge von einigen Metern und einen Innendurchmesser von etwa 20 bis 250 mm. Im Gegensatz zu kleineren mobilen Saugeinrichtungen mit Transportrollen, ist es bei großen Industriesaugeinrichtungen, insbesondere bei mobilen Einrichtungen, aber auch bei stationären Einrichtungen, welche mit einem zentral angeordneten Saugaggregat mehrere Ansaugstellen bedienen, häufig erforderlich, Saugschläuche, die sich aus mehreren Einzelschläuchen zusammen setzen vorzusehen. Diese Anforderung ist speziell bei Anlagen, die im Außendienst eingesetzt werden häufig gegeben, da das auf einem Lastkraftwagen angeordnete Saugaggregat oft nicht nah genug an die Aufsaugstelle herangebracht werden kann.

### Stand der Technik

Aus dem Stand der Technik ist eine Reihe von Einrichtungen in der Form von Schlauchkupplungen bekannt. So beschreibt das Österreichische Patent AT 241 212 B eine lösbare Schlauchkupplung, bei der eine sich gegen das Einsteckende schwach konisch verjüngende Einsteckhülse mit nach rückwärts anschließendem Außengewinde, eine darauf aufschraubbare Zwischenhülse mit einer Bohrung zum Einstecken des Schlauchendes und einem bis zu einer Schulter reichenden Außengewinde, eine Schraubhülse, die bis zur genannten Schulter auf die Zwischenhülse aufschraubbar ist, eine nach innen vorspringende, einen Anschlag bildende ringförmige Verdickung und eine Klemmhülse, die außen zylindrisch begrenzt und an der Innenseite hohlkonisch ausgebildet und mit umlaufenden Rippen versehen ist. Diese Schlauchkupplung ist kompliziert aufgebaut und für die Anwendung bei Industriesaugschläuchen ungeeignet, da sie aufgrund der hohen Schlauchquerschnitte rasch zu schwer für eine vernünftige Handhabung wird.

Die DE 201 09 255 U1 beschreibt eine Kupplung zur koaxialen Verbindung von Schlauchleitungen, wobei zwei gleich ausgebildete Kupplungshülsen auf den zu verbindenden Schlauchenden befestigt sind, deren Stirnflansche axiale Ringnuten aufweisen, wobei in die Ringnuten Passstifte eingesetzt sind, deren aus der Trennebene vorstehende Enden in die Ringnut des Gegenstückes einpassen. Die beiden Flansche werden hierbei durch Spannschlösser axial gegeneinander verspannt.

Ähnlich aufgebaut ist eine Ausführung einer Schlauchkupplung, wie sie die DE 20 2010 012 940 U1 offenbart. Sie besteht aus zwei Hülsen mit je einem Flansch und einem separaten Schellenelement. Die beiden Flansche sind zueinander korrespondierend ausgebildet. Die Kupplung wird geschlossen, indem zwei gelenkig miteinander verbundene Schellensegmente, die einen im Wesentlichen U-förmigen Querschnitt aufweisen die Flansche der Hülsen in Gebrauchsposition in miteinander gekoppeltem Zustand außen übergreifen und halten, wobei die freien Enden der Schellensegmente mittels einander korrespondierender Verbinderelemente geschlossen werden.

Da die mit dem Saugmedium transportierten Feststoffe mit hoher Geschwindigkeit durch den Schlauch geleitet werden, sind die Verbindungsstücke solcher Einrichtungen nach dem Stand der Technik hohen abrasiven Kräften ausgesetzt und müssen als Verschleißteile in regelmäßigen Zeitabständen ausgewechselt werden, womit ein hoher Zeitaufwand und hohe Kosten verbunden sind.

Um dieses Problem zu lösen beschreibt die DE 20 2014 100 493 U1 eine Schlauchverbindung für Saugschläuche einer Industriesaugeinrichtung, bei der die Verbindung zweier Schlauchenden ohne die Verwendung von Verschleißteilen ermöglicht wird. Hierbei werden die Schlauchenden von zwei axial zu verbindenden Saugschläuchen in eine im wesentlichen rohrförmig ausgebildete Halteeinrichtung eingelegt, wobei die Halteeinrichtung aus zwei starren Halbschalen mit innenliegenden ringförmigen Stegen und einem außenliegenden Verschluss besteht. Diese Erfindung des Anmelders hat jedoch den Nachteil, dass sie nicht für verschiedene Schlauchtypen desselben Innendurchmessers eingesetzt werden kann, d.h. die jeweilige Schlauchverbindung wird für die Verbindung zweier konkrete Saugschläuche mit konkreter Wandstärke eingesetzt und kann nicht zusätzlich für die Verbindung von zwei Saugschläuchen gleichen Innendurchmessers aber anderer Wandstärke eingesetzt werden, da ansonsten die Gefahr eines Auszuges des Saugschlauches aus der Kupplung zu groß ist.

Industriesaugschläuche können aus unterschiedlichsten Polyurethanen, beispielsweise aus PU-H, PU-HS, PU-HX, aus PVC, beispielsweise aus PVC Flex oder aus diversen Gummimaterialien gefertigt sein, aber auch andere Materialen sind denkbar. Sie können einlagig oder mehrlagig sein oder metallische Versteifungseinlage, etwa in der Form einer Spirale aufweisen. Dementsprechend weisen die Schläuche unterschiedliche Wandstärken auf. Die entsprechende Schlauchkupplung nach DE 20 2014 100 493 U1 müsste daher für jede Schlauchart passgenau gefertigt sein um ein optimales Kupplungsergebnis zu erbringen. In der Praxis ist es aber wünschenswert, wenn lediglich eine Differenzierung nach dem Schlauchinnendurchmesser erfolgt, aber eine bestimmte Kupplung für unterschiedlichste Schlaucharten desselben Innendurchmessers verwendet werden kann.

Ein weiterer Nachteil dieser Schlauchkupplung nach DE 20 2014 100 493 U1 besteht darin, dass sie für Rohrdimensionen größer 150 mm nicht mehr verwendbar ist, da sie beim Schließen der Halbschalen die Schlauchaußenwand quetscht. Noch ein Nachteil besteht darin, dass beim Schließen der Halbschalen über beispielsweise einen Bügelverschluss die beiden innen aneinander liegenden Rohrenden entlang ihres Umfanges unterschiedlich starken Pressdrücken ausgesetzt sind. Der Pressdruck ist am axialen Rand der Halbschale geringer als entlang seiner mittleren Längsachse. Dies wirkt sich negativ auf die Auszugskräfte aus und muss durch einen erhöhten Pressdruck ausgeglichen werden.

### Technische Aufgabenstellung

Die vorliegende Erfindung stellt sich daher die Aufgabe, eine Schlauchkupplung bzw. Halteeinrichtung zur lösbaren, koaxialen Auf-Stoß-Verbindung von Schlauchleitungen für Saugeinrichtungen der eingangs genannten Art zu erstellen, welche für die unterschiedlichsten industriellen Anwendungen geeignet ist und die genannten Nachteile des Standes der Technik zuverlässig vermeidet. Insbesondere soll sie für Schläuche aus unterschiedlichen Materialien und damit unterschiedlichen Wandstärken einsetzbar sein und hohen Ausziehkräften zuverlässiger standhalten als dies die bekannten Vorrichtungen können.

### Kurzbeschreibung der Erfindung

Diese Aufgabe wird ausgehend von einer Schlauchkupplung der eingangs genannten Gattung erfindungsgemäß dadurch gelöst, dass die Halteeinrichtung mindestens drei Rohrsegmente umfasst, welche in ihrer Gesamtheit ein in Rohrlängsrichtung segmentiertes Halterohr bilden, und dass die Rohrsegmente an ihrer Außenfläche jeweils mit mindestens einem Ringsegment verbunden sind, wobei die Ringsegmente in einer gemeinsamen Querschnittsebene in Umfangsrichtung hintereinander verlaufend miteinander verbunden sind und in ihrer Gesamtheit einen Spannring um das Halterohr bilden, wobei die Verbindung in Umfangsrichtung benachbarter Ringsegmente untereinander wahlweise über Scharniere und über mindestens eine Einrichtung zum Verschließen des Spannrings auf Zug erfolgt.

Vorteilhafte Ausführungsformen der Schlauchkupplung sind Gegenstand der Unteransprüche.

Dabei hat sich bewährt, wenn die Einrichtung zum Verschließen des Spannrings ein Bügelverschluss ist, der über eine Ankerplatte mit einer an einem ersten Ringsegment endständig angeformten Platte lösbar verbunden ist und über einen Kippmechanismus einen Bügel bewegt, wobei der Bügel in einen endständigen Einrasthaken eines zweiten Ringsegmentes eingreift.

In einer weiteren vorteilhaften Ausgestaltung der Erfindung sind mehrere Ringsegmente vorgesehen, wobei jeweils zwei in axialer Richtung nebeneinander liegende Ringsegmente über mehrere in Umfangsrichtung verteilte eingeschweißte Splinte und Scharnierbolzen in den Scharnieren untereinander verbunden sind und über einen gemeinsamen Bügelverschluss verfügen, und wobei der Bügel die beiden nebeneinander liegenden Einrasthaken umfasst.

Bewährt hat sich auch, wenn im Bügelverschluss ein federbelasteter Sicherungszapfen vorgesehen ist, der beim Schließen des Bügelverschlusses selbsttätig in eine schlitzförmige Ausnehmung arretierend eingreift.

Es hat sich außerdem als günstig erwiesen, wenn der Bügel endständig jeweils ein Gewinde aufweist, mittels welchem der Durchmesser und/oder die Spannkraft des Spannrings an die jeweilige Wandstärke der zu verbindenden Saugschläuche angepasst wird.

Die Rohrsegmente bestehen vorteilhaft aus gepresstem Stahl.

Eine Verbesserung besteht darin, dass die Rohrsegmente an ihrer innenliegenden Oberfläche mit einer rutschfesten, insbesondere geriffelten Einlage beschichtet sind.

Besonders vorteilhaft ist eine flexible, dichtende Einlage, welche zwischen den Einlagen und den Rohrenden der Saugschläuche angeordnet ist und diese vollständig überlappend abdeckt.

Es hat sich außerdem als günstig erwiesen, wenn an einem der Schalensegmente außenliegend ein Tragegriff angebracht ist

### Ausführungsbeispiel

Die Erfindung wird nachstehend anhand der einzigen Figur näher erläutert. Diese zeigt eine Schrägansicht der geschlossenen erfindungsgemäßen Halteeinrichtung bzw. Schlauchkupplung, jedoch ohne Saugschläuche.

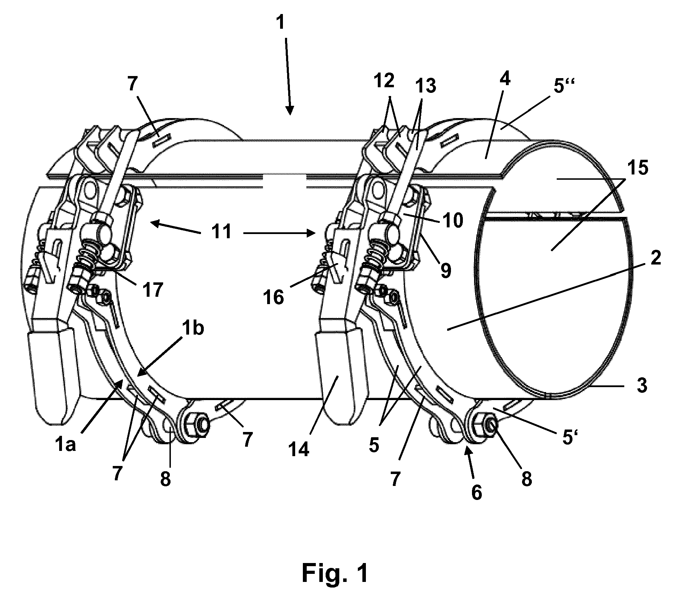

Wie in Figur 1 erkennbar, umfasst die erfindungsgemäße Halteeinrichtung zur lösbaren, koaxialen Auf-Stoß-Verbindung von Schlauchleitungen für Saugeinrichtungen, insbesondere für Industriesaugeinrichtungen im Wesentlichen eine rohrförmige Halteeinrichtung 1, umfassend mehr als zwei, insbesondere drei Rohrsegmente 2, 3 und 4, welche aus einem formstabilen Material, beispielsweise aus gepresstem Stahl bestehen. Die Rohrsegmente 2, 3, 4 bilden in ihrer Gesamtheit ein in Rohrlängsrichtung segmentiertes Halterohr. Jedes Rohrsegment besitzt an seinem äußeren Umfang mehrere, insbesondere jeweils vier, in Rohrlängsrichtung gesehen, parallel zueinander verlaufende Ringsegmente, welche mit dem Rohrsegment fest verbunden, insbesondere verschweißt sind. Beim Zusammenbau der Rohrsegmente zu einem Halterohr sind jeweils zwei in Umfangsrichtung hintereinander verlaufende Ringsegmente 5, 5' und 5', 5" in derselben Querschnittsebene miteinander über Scharniere 6 verbunden. Jeweils drei Ringsegmente 5, 5', 5" bilden einen um das Halterohr umlaufenden Spannring 1a bzw. 1 b. Zur Erhöhung der Steifigkeit des Schalenverschlusses bei gleichzeitig geringem Gewicht sind jeweils zwei nebeneinander liegende Spannringe 1a, 1 b über mehrere in Umfangsrichtung verteilte eingeschweißte Splinte 7 und Scharnierbolzen 8 in den Scharnieren 6 untereinander verbunden.

Jeweils zwei Ringsegmente 5 sind über daran angeformte Platten 9 mit der Ankerplatte 10 eines Bügelverschlusses 11 verbunden. Die Ringsegmente 5" besitzen endständig Einrasthaken 12, in welche der Bügel 13 des Bügelverschlusses 11 eingelegt wird. Durch Kippen eines Griffes 14 des Bügelverschlusses 11 wird der Bügel 13 in die Einrasthaken 12 gezogen, wodurch die Halteeinrichtung 1 geschlossen wird bei gleichzeitigem Anpressen an die nicht gezeigten Rohrenden zweier Saugschläuche. Die Rohrsegmente 2, 3 und 4 sind an ihrer innenliegenden Oberfläche mit einer rutschfesten, insbesondere auch geriffelten Einlage 15 beschichtet.

In einer bevorzugten Ausführung der Erfindung wird zwischen den Einlagen 15 und den Rohrenden der Saugschläuche eine hier nicht dargestellte flexible Einlage eingelegt, welche die Rohrenden radial vollständig umfasst und dabei noch geringfügig überlappt. Diese Einlage, welche beispielsweise eine Latexeinlage ist, dient der Abdichtung der Saugschlauchverbindung und wirkt zusätzlich gegen die Auszugskräfte.

In einer weiteren bevorzugten Ausführung der Erfindung weist der Bügelverschluss eine an sich bekannte Sicherungseinrichtung auf, welche beim Schließen des Bügelverschlusses 11 selbsttätig einrastet und ein ungewolltes Öffnen des Bügelverschlusses zuverlässig verhindert. Dabei gleitet ein federbelasteter Sicherungszapfen 16 in eine schlitzförmige Ausnehmung am Griff 14 ein und kann nur durch Fingerdruck aus dieser Ausnehmung wieder entfernt werden.

Bevorzugt wird die Halteeinrichtung 1 mittels Gewindebolzen 17 auf die jeweilige Wandstärke des Saugschlauches eingestellt um eine optimale Anpassung der Rohrsegmente 2, 3 und 4 an die jeweilige Schlauchwanddicke anzupassen.

Der Bügel 13 weist dazu endständig jeweils ein Gewinde auf, mittels welchem der Durchmesser und/oder die Spannkraft des Spannrings 1 a, 1 b an die Wandstärke der zu verbindenden Saugschläuche angepasst werden kann.

Die erfindungsgemäße Halteeinrichtung wiegt für Schläuche mit einem Durchmesser von beispielsweise 150 mm etwa 5 kg. Es hat sich daher als vorteilhaft erwiesen, an einem der Rohrsegmente 2 oder 4 einen Tragegriff zu fixieren.

Gegenüber den herkömmlichen Schlauchverbindungen weist die erfindungsgemäße Halteeinrichtung folgende Vorteile auf:
➢ Sie ist einfach in der Handhabung und kann von nur einer Person bedient werden;
➢ sie ist leichter als viele herkömmliche Schlauchkupplungen;
➢ sie ist keinem durch das transportierte Fluid verursachten Materialverschleiß ausgesetzt;
➢ ihre Montage erfordert einen geringeren Zeitaufwand;
➢ der Anpressdruck ist besser auf die Außenwände der Schlauchenden verteilt als bei einer zweischaligen Kupplung;
➢ sie ist bei gegebenem Innendurchmesser des Saugschlauches für Saugschläuche aus unterschiedlichstem Material mit unterschiedlichen Wandstärken einsetzbar;
➢ sie ist problemlos auch für Saugschläuche mit einem Innendurchmesser von mehr als 150 mm anwendbar;
➢ durch unvorsichtiges Handling beschädigte Bügelverschlüsse 11 können in einfacher Art ohne großem Aufwand ausgetauscht werden;
➢ sie kann universell für die unterschiedlichsten Anwendungen eingesetzt werden;
➢ eine Verwirbelung des transportierten Fluids im Bereich der Schlauchkupplung wird weitestgehend verhindert, wodurch der Energieaufwand für den Transport des Fluids sinkt.

Die hier beschriebene und in der Figur 1 dargestellte Ausführungsform der Halteeinrichtung 1 weist drei Rohrsegmente auf. Es versteht sich jedoch von selbst, dass diese Halteeinrichtung auch aus mehr als drei Rohrsegmenten aufgebaut sein kann, woraus sich aber keine weiteren Vorteile ableiten. Die Erfindung ist daher ausdrücklich nicht auf die dreischalige Bauweise beschränkt. Ebenso wenig ist sie auf die Anwendung im industriellen Bereich beschränkt.

## Patentansprüche

1. Halteeinrichtung zur lösbaren, koaxialen Auf-Stoß-Verbindung von Schlauchleitungen für Saugeinrichtungen, insbesondere für Industriesaugeinrichtungen, **dadurch gekennzeichnet, dass** die Halteeinrichtung (1) mindestens drei Rohrsegmente (2, 3, 4) umfasst, welche in ihrer Gesamtheit ein in Rohrlängsrichtung segmentiertes Halterohr bilden, und dass die Rohrsegmente (2, 3, 4) an ihrer Außenfläche jeweils mit mindestens einem Ringsegment (5, 5', 5") verbunden sind, wobei die Ringsegmente (5, 5', 5") in einer gemeinsamen Querschnittsebene in Umfangsrichtung hintereinander verlaufend miteinander verbunden sind und in ihrer Gesamtheit einen Spannring (1 a; 1 b) um das Halterohr bilden, wobei die Verbindung in Umfangsrichtung benachbarter Ringsegmente (5, 5' 5") untereinander wahlweise über Scharniere (6) und über mindestens eine Einrichtung zum Verschließen des Spannrings (1 a; 1 b) auf Zug erfolgt.

2. Halteeinrichtung nach Anspruch 1, **dadurch gekennzeichnet, dass** die Einrichtung zum Verschließen des Spannrings (1 a; 1 b) ein Bügelverschluss (11) ist, der über eine Ankerplatte (10) mit einer an einem ersten Ringsegment (5) endständig angeformten Platte (9) lösbar verbunden ist und über einen Kippmechanismus einen Bügel (13) bewegt, wobei der Bügel (13) in einen endständigen Einrasthaken (12) eines zweiten Ringsegmentes (5") eingreift.

3. Halteeinrichtung nach Anspruch 1 oder 2, **dadurch gekennzeichnet, dass** mehrere Ringsegmente (5, 5', 5") vorgesehen sind, wobei jeweils zwei in axialer Richtung nebeneinander liegende Ringsegmente (5, 5', 5") über mehrere in Umfangsrichtung verteilte eingeschweißte Splinte (7) und Scharnierbolzen (8) in den Scharnieren (6) untereinander verbunden sind und über einen gemeinsamen Bügelverschluss (11) verfügen, und wobei der Bügel (13) die beiden nebeneinander liegenden Einrasthaken (12) umfasst.

4. Halteeinrichtung nach einem der Ansprüche 1 bis 3, **dadurch gekennzeichnet, dass** im Bügelverschluss (11) ein federbelasteter Sicherungszapfen (16) vorgesehen ist, der beim Schließen des Bügelverschlusses (11) selbsttätig in eine schlitzförmige Ausnehmung arretierend eingreift.

5. Halteeinrichtung nach einem der Ansprüche 1 bis 4, **dadurch gekennzeichnet, dass** der Bügel (13) endständig jeweils ein Gewinde aufweist, mittels welchem der Durchmesser und/oder die Spannkraft des Spannrings (1 a; 1 b) an die jeweilige Wandstärke der zu verbindenden Saugschläuche angepasst wird.

6. Halteeinrichtung nach einem der Ansprüche 1 bis 5, **dadurch gekennzeichnet, dass** die Rohrsegmente (2, 3, 4) aus gepresstem Stahl bestehen.

7. Halteeinrichtung nach einem der Ansprüche 1 bis 6, **dadurch gekennzeichnet, dass** die Rohrsegmente (2, 3, 4) an ihrer innenliegenden Oberfläche mit einer rutschfesten, insbesondere geriffelten Einlage (15) beschichtet sind.

8. Halteeinrichtung nach einem der Ansprüche 1 bis 7, **dadurch gekennzeichnet, dass** eine flexible, dichtende Einlage vorgesehen ist, welche zwischen den Einlagen (15) und den Rohrenden der Saugschläuche angeordnet ist und diese vollständig überlappend abdeckt.

9. Halteeinrichtung nach einem der Ansprüche 1 bis 8, **dadurch gekennzeichnet, dass** an einem der Schalensegmente (2, 4) außenliegend ein Tragegriff angebracht ist.
